# EUROPEAN PATENT APPLICATION

(11) **EP 2 381 096 A1**
(43) Date of publication of application: **26.10.2011**
(21) Application number: 09838849.9
(22) Date of filing: 10.11.2009
(51) Int. Cl.: F03D 7/04

(54) **CYLINDER DRIVE DEVICE**

(30) Priority: 22.01.2009 JP 2009012280
(71) Applicant: Mitsubishi Heavy Industries, Ltd., Tokyo 108-8215 (JP)
(72) Inventor: KEITARO, KAMATA, Nagasaki-Ken 851-0392 (JP); ATSUSHI YUGE, Nagasaki-Ken 851-0392 (JP)
(74) Representative: Intès, Didier Gérard André
(86) International application number: PCT/JP2009/069127
(87) International publication number: WO 2010/084659

(57) **Abstract**

An object is to provide a cylinder driving device of a wind-power generation system capable of appropriately controlling a pitch angle of each rotor blade at a time of power failure with a simple configuration. The present invention achieves the object by including a piston connected to the rotor blade; a cylinder that moves the piston by a hydraulic pressure; an urging member that urges the piston in one direction; an accumulator that is connected to the cylinder, and supplies hydraulic oil urging the piston in an opposite direction to a direction where the piston is urged by the urging member to the cylinder; and an on/off valve that controls opening or closing of a channel between the accumulator and the cylinder.

## Description

### Field

The present invention relates to a cylinder driving device that adjusts an angle of a rotor blade of a wind-power generation system.

### Background

A wind-power generation system is a system that rotates a wind turbine (rotor blades) by a wind blowing over the turbine or blades and that generates electric power by a rotational force of the wind turbine. As this wind-power generation system, there has been known a wind-power generation system that includes an angle adjustment mechanism that adjusts an angle of each blade so that the wind turbine has an optimum rotation speed to efficiently generate and supply electric power. For example, Patent Literature 1 describes a variable blade mechanism capable of changing a pitch angle of a blade (a rotor blade) provided on a rotor head of a wind turbine, where a servo actuator is configured to include a hydraulic actuator driven to change the pitch angle of the blade; a bi-directional pump having both discharge ports connected to the hydraulic actuator, and actuating the hydraulic actuator in a positive or negative direction according to a rotational direction of the bi-directional pump; and a positive/negative rotation motor capable of driving the bi-directional pump in the positive or negative direction, and where the servo actuator is attached to the rotor head of the wind turbine. In this manner, it is possible to efficiently generate electric power by adjusting the angle of the rotor blade.

In a case of the wind-power generation system that adjusts the angle of the rotor blade as described above, it is necessary to actuate the system safely even when the electric power to be supplied to the variable blade mechanism decreases due to power failure or the like. In this respect, Patent Literature 2 describes a wind-power generation system that includes a wind turbine rotor including blades having variable pitch angles, a pitch control mechanism that drives each of the blades to control the pitch angle of the blade, and an emergency power supply mechanism that supplies electric power generated from rotation of the wind turbine rotor to the pitch control mechanism in response to occurrence of an abnormality of a fall in a system voltage of an electric system.

### Citation List

### Patent Literature

Patent Literature 1: Japanese Patent Application Laid-open No. 2002-276535
Patent Literature 2: Japanese Patent Application Laid-open No. 2007-238599 Summary

### Technical Problem

As described in Patent Literature 2, it is possible to drive the wind-power generation system even in an emergency similarly to operations at normal times by providing the emergency power supply mechanism that acquires the power from the rotation of the wind turbine rotor. However, the conventional technique has the following problems. It is necessary to provide the emergency power supply mechanism anew in the wind-power generation system. In addition, the emergency power supply mechanism uses the electric power generated in the wind-power generation system. Accordingly, the device cost and energy cost disadvantageously rise.

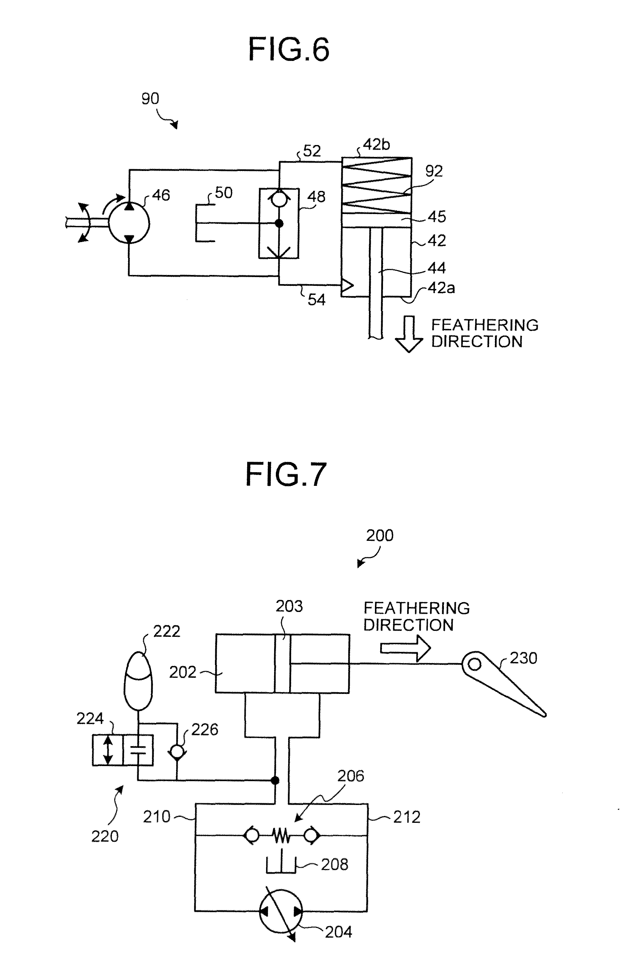

Moreover, as shown in FIG. 7, the wind-power generation system is configured so that an accumulator is provided in a cylinder driving mechanism that adjusts a pitch angle of a rotor blade so as to deal with the time of an emergency. FIG. 7 is a block diagram of a schematic configuration of a conventional cylinder driving device. A cylinder driving device 200 shown in FIG. 7 is a device that adjusts a pitch angle of a rotor blade 230, and includes a cylinder 202; a piston 203 that is arranged within the cylinder 202, connected to the rotor blade 230 via a connecting member, reciprocates along the cylinder 202 by a hydraulic pressure of hydraulic oil supplied into the cylinder 202, and changes the pitch angle of the rotor blade 230; a bi-directional hydraulic pump 204 that supplies the hydraulic oil to two pipes, respectively, the two pipes being a pipe 210 connected to a side of the cylinder 202, into which side the connecting member connected to the piston 203 is not inserted and a pipe 212 connected to a side of the cylinder 202, into which side a rod portion of the piston 203 is inserted; a check valve 206 that discharges a surplus of the hydraulic oil in the pipes 210 and 212; a tank 208 that stores the hydraulic oil discharged from the check valve 206; and a hydraulic adjustment mechanism 220 connected to the pipe 210. In FIG. 7, the cylinder driving device 200 supplies the hydraulic oil to the cylinder 202 from the pipe 210 by the bi-directional hydraulic pump 204 and moves the piston 203, thereby moving the rotor blade 230 in a direction of feathering wind resistance (hereinafter, also "feathering direction"). Furthermore, the hydraulic adjustment mechanism 220 includes an accumulator 222 that stores the hydraulic oil and supplies the hydraulic oil to the pipe 210 according to need; an on/off valve 224 that switches opening and closing of a channel between the accumulator 222 and the pipe 210, and a safety valve 226 arranged in parallel with the on/off valve 224 and causing the hydraulic oil to flow only in a direction from the pipe 210 to the accumulator 222. At a time of ordinary operations, the cylinder driving device 200 supplies the hydraulic oil from the bi-directional hydraulic pump 204 to the cylinder 202. The cylinder driving device 200 moves the rotor blade 230 in the feathering direction by supplying the hydraulic oil to the pipe 210 from the bi-directional hydraulic pump 204, and moves the rotor blade 230 in an opposite direction to the feathering direction (hereinafter, the opposite direction is referred to as "fine direction") by supplying the hydraulic oil to the pipe 212. At such a time of ordinary operations, the on/off valve 224 is in an off state, that is, in a state where no hydraulic oil is supplied from the accumulator 222 to the pipe 210.

Next, when electric power is not supplied due to occurrence of power failure such as instantaneous power failure and the bi-directional pump 204 cannot be driven, then the cylinder driving device 200 opens the on/off valve 224 to turn into a state where the channel between the accumulator 222 and the pipe 210 is continuous, and supplies the hydraulic oil to the cylinder 202 from the accumulator 222 via the pipe 210. At this time, by using a valve configured to be turned on in a power failure state, that is, in a state where the valve remains open while no power is supplied as the on/off valve 224, the on/off valve 224 can be automatically opened during power failure. The cylinder driving device 200 moves the rotor blade 230 in the feathering direction by supplying the hydraulic oil from the pipe 210 to the cylinder 202.

In this manner, during power failure, the cylinder driving device 200 supplies the hydraulic oil from the accumulator 222 and moves the rotor blade 230 in the feathering direction, thereby making it possible for the rotor blade 230 to feather the wind. This can suppress the rotor blade 230 from rotating at a speed higher than a necessary speed, a load applied to the rotor blade 230 from increasing to cause a failure of the rotor blade 230. Moreover, because the rotor blade 230 can be controlled at the time of power failure using only the accumulator 222, it is possible to make the device configuration simpler and reduce a production cost of a wind-power generation system. However, at a time of an emergency, in the wind-power generation system including the cylinder driving device 200, the cylinder driving device 200 rotates the rotor blade 230 in the direction of feathering the wind irrespectively of a wind velocity so as to suppress rotation of a rotor. Therefore, the cylinder driving device 200 cannot control the rotor blade 230 similarly to the time of ordinary operations, that is, cannot rotate the rotor blade 230 according to the wind velocity, resulting that power generation cannot be performed efficiently.

The present invention has been achieved in view of the above problems and an object of the present invention is to provide a cylinder driving mechanism of a wind-power generation system capable of appropriately controlling a pitch angle of a rotor blade with a simple configuration even at a time of power failure.

### Solution to Problem

According to an aspect of the present invention, a cylinder driving device that adjusts a pitch angle of a rotor blade includes: a piston connected to the rotor blade via a connecting member; a cylinder that has the piston arranged therein, reciprocates an end of the piston by a pressure difference between hydraulic pressures of hydraulic oil supplied from outside, and reciprocates the piston; an urging member that is arranged inside the cylinder, and urges the piston in one direction; an accumulator that is connected to the cylinder, and supplies hydraulic oil urging the piston in an opposite direction to a direction where the piston is urged by the urging member to the cylinder; and an on/off valve that controls opening or closing of a channel between the accumulator and the cylinder.

Advantageously, in the cylinder driving device, the on/off valve opens a channel between the accumulator and the cylinder at a time of occurrence of power failure.

According to another aspect of the present invention, a cylinder driving device that adjusts a pitch angle of a rotor blade includes: a piston connected to the rotor blade; a cylinder that has the piston arranged therein, reciprocates an end of the piston by a pressure difference between hydraulic pressures of hydraulic oil supplied from outside, and reciprocates the piston; a hydraulic-oil supplying unit that supplies hydraulic oil to the cylinder; a first pipe that supplies hydraulic oil supplied from the hydraulic-oil supplying unit to the cylinder so as to urge the piston in one direction; a second pipe that supplies hydraulic oil supplied from the hydraulic-oil supplying unit to the cylinder so as to urge the piston in an opposite direction to the one direction; an accumulator that is connected to the cylinder, and supplies hydraulic oil to a pipe connected to the cylinder; an on/off valve that controls opening or closing of a channel between the accumulator and the cylinder; and a switch unit arranged between the on/off valve and the cylinder, and switchable over between a path of supplying hydraulic oil supplied from the accumulator to the first pipe and a path of supplying hydraulic oil supplied from the accumulator to the second pipe.

Advantageously, in the cylinder driving device, the hydraulic-oil supplying unit stops at a time of occurrence of power failure, the on/off valve opens a channel between the accumulator and the cylinder at a time of occurrence of power failure, and the switch unit is activated at a time of occurrence of power failure.

According to still another aspect of the present invention, a cylinder driving device that adjusts a pitch angle of a rotor blade includes: a piston connected to the rotor blade; a cylinder that has the piston arranged therein, reciprocates an end of the piston by a pressure difference between hydraulic pressures of hydraulic oil supplied from outside, and reciprocates the piston; a hydraulic-oil supplying unit that supplies hydraulic oil to the cylinder; a first pipe that supplies hydraulic oil supplied from the hydraulic-oil supplying unit to the cylinder so as to urge the piston in one direction; a second pipe that supplies hydraulic oil supplied from the hydraulic-oil supplying unit to the cylinder so as to urge the piston in an opposite direction to the one direction; and an urging member that is arranged inside the cylinder, and urges the piston in a direction of moving the piston so that the rotor blade moves in a direction of feathering a wind.

### Advantageous Effects of Invention

The cylinder driving device according to the present invention can appropriately control a pitch angle of a rotor blade for a certain time even at a time of power failure. Furthermore, the cylinder driving device according to the present invention can be made simple in the device configuration and can be manufactured at a low cost.

### Brief Description of Drawings

FIG. 1 is a side view of a schematic configuration of a wind-power generation system using a cylinder driving device according to an embodiment of the present invention.
FIG. 2 is a block diagram of a schematic configuration of peripheral parts of a nacelle and rotor blades of the wind-power generation system shown in FIG. 1.
FIG. 3 is a block diagram of a schematic configuration of a cylinder driving device shown in FIG. 2.
FIG. 4 is a block diagram of a schematic configuration of a cylinder driving device according to another embodiment.
FIG. 5 is a block diagram of a schematic configuration of a cylinder driving device according to another embodiment.
FIG. 6 is a block diagram of a schematic configuration of a cylinder driving device according to another embodiment.
FIG. 7 is a block diagram of a schematic configuration of a conventional cylinder driving device.

### Description of Embodiments

Exemplary embodiments of a cylinder driving device according to the present invention will be explained below in detail with reference to the accompanying drawings. The present invention is not limited to the following embodiments.

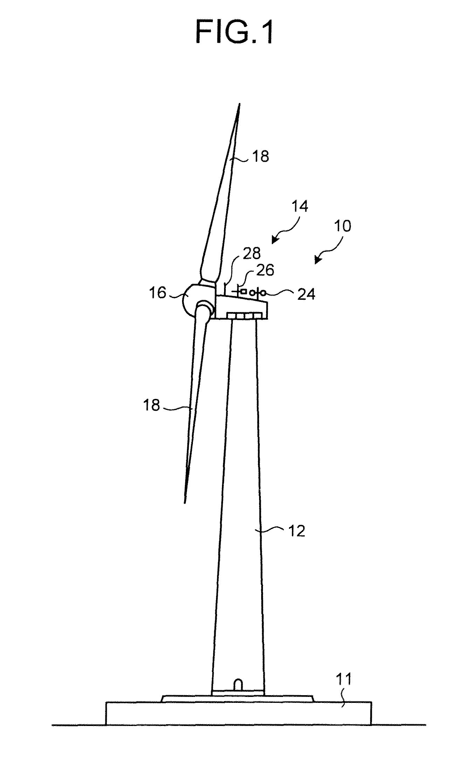

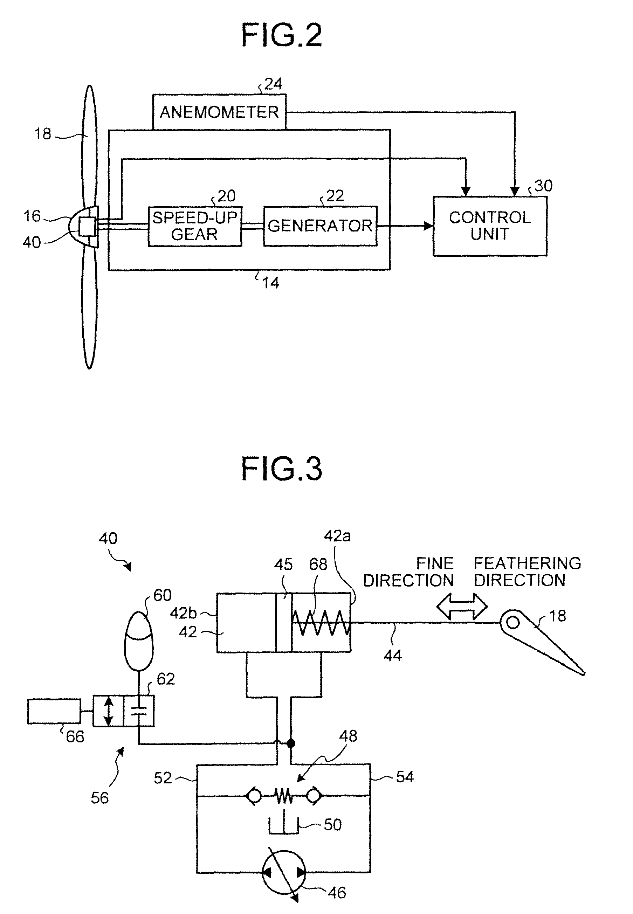

FIG. 1 is a side view of a schematic configuration of a wind-power generation system using a cylinder driving device according to an embodiment of the present invention. FIG. 2 is a block diagram of a schematic configuration of peripheral parts of a nacelle and rotor blades of the wind-power generation system shown in FIG. 1. As shown in FIGS. 1 and 2, a wind-power generation system 1 includes a column 12, a nacelle 14, a rotor head 16, a plurality of rotor blades 18, a speed-up gear 20, a generator 22, an anemometer 24, an anemoscope 26, a lightning rod 28, a control unit 30, and a cylinder driving device 40.

The column 12 is a post disposed on a foundation 11 formed on the ground. The nacelle 14 has the speed-up gear 20, the generator 22, the cylinder driving device 40 and the like installed therein, and is provided on a tip end of the column 12 (an end of the column 12 opposite to a connecting portion connected to the foundation 11). The rotor head 16 is supported rotatably about an axis generally horizontal to the nacelle 14. Further, the rotor head 16 is connected to the speed-up gear 20. A plurality of rotor blades 18 are attached radially about a rotational axis of the rotor head 16. The rotor blades 18 are blades fixed to the rotor head 16 in a state of being rotatable, together with the rotor head 16, about the rotational axis of the rotor head 16. Each of the rotor blades 18 converts a force of a wind blown over from a direction of the rotational axis of the rotor head 16 into a force of rotating the rotor head 16 about the rotational axis.

The speed-up gear 20 is arranged within the nacelle 14 and connected to the rotor head 16. The speed-up gear 20 speeds up rotation of the rotor head 16 and transmits the speeded-up rotation to the generator 22. The generator 22 is connected to the rotor head 16 via the speed-up gear 20, and generates electric power from a rotational force transmitted from the rotor head 16 and speeded up by the speed-up gear 20.

The anemometer 24, the anemoscope 26, and the lightning rod 28 are arranged in an upper portion of the nacelle 14. The anemometer 24 detects a wind velocity around the nacelle 14 and the rotor blades 18 and transmits a detection result to the control unit 30. The anemoscope 26 detects a direction of a wind blowing around the nacelle 14 and the rotor blades 18 and transmits a detection result to the control unit 30. The lightning rod 28 prevents a control circuit of the nacelle 14 from being damaged as a result of thunderstorm striking the nacelle 14. Further, the cylinder driving device 40 is arranged within the rotor head 16 and adjusts a pitch angle of each of the rotor blades 18. The cylinder driving device 40 is described later in detail.

The control unit 30 is a device that controls operations performed by respective parts such as the generator 22 and the cylinder driving device 40. For example, based on the detection results transmitted from the anemometer 24 and the anemoscope 26, the control unit 30 controls the cylinder driving device 40 to adjust the pitch angle of each of the rotor blades 18 or determines to activate or deactivate power generation made by the generator 22.

The cylinder driving device 40 is described next in detail. FIG. 3 is a block diagram of a schematic configuration of the cylinder driving device 40 shown in FIG. 2. As shown in FIG. 3, the cylinder driving device 40 includes a cylinder 42, a connecting member 44, a piston 45, a bi-directional hydraulic pump 46, a check valve 48, a tank 50, pipes 52 and 54, a hydraulic adjustment mechanism 56, and a spring 68.

The cylinder 42 is a cylindrical member into which hydraulic oil is injected and the piston 45 is inserted into the cylinder 42. Furthermore, the pipe 52 is connected to neighborhoods of one end of the cylinder 42 (neighborhoods of a bottom surface 42b of a cylindrical shape), and the pipe 54 is connected to neighborhoods of the other end of the cylinder 42 (neighborhoods of a top surface 42a of the cylindrical shape).

The connecting member 42 is a rod member, inserted into the cylinder 42 from the top surface 42a of the cylinder 42 (an end surface closer to the rotor blade 18). One end of the connecting member 44 is connected to the piston 45 arranged in the cylinder 42 and the other end thereof is connected to the rotor blade 18 via a link or the like.
The piston 45 is a cylindrical member connected to the end of the connecting member 44, which end is arranged in the cylinder 42 and generally identical in shape to a cylindrical inner wall of the cylinder 42. The piston 45 divides an internal space of the cylinder 42 into a top surface 42a side and a bottom surface 42b side of the cylinder 42. The piston 45 receives a difference between the hydraulic oil supplied from the pipe 52 connected to the bottom surface 42b side of the cylinder 42 and the hydraulic oil supplied from the pipe 54 connected to the top surface 42a side of the cylinder 42, that is, a difference between hydraulic pressures of the hydraulic oil supplied into the cylinder 42. The piston 45 moves along the cylinder 42 in a direction where the pressure is lower. Specifically, the piston 45 moves in a direction farther from the bottom surface 42b of the cylinder 42 when the hydraulic oil is supplied from the pipe 52, and moves in a direction closer to the bottom surface 42b of the cylinder 42 when the hydraulic oil is supplied from the pipe 54. Moreover, because of connection of the piston 45 to the rotor blade 18 via the connecting member 44, a reciprocating motion of the piston 45 is transmitted to the rotor blade 18 via the connecting member 44 and the rotor blade 18 is rotated based on a center of the link (that is, around the rotation axis of the rotor blade 18). The pitch angle of the rotor blade 18 changes when the rotor blade 18 rotates about the rotation axis of the rotor blade 18. Specifically, the pitch angle of the rotor blade 18 changes in a direction of feathering the wind (hereinafter, "feathering direction") when the piston 45 moves in the direction farther from the bottom surface 42b. The pitch angle of the rotor blade 18 changes in a direction of receiving a greater wind force, that is, in a direction of converting the force of the blown wind into a force of rotation at a higher velocity (hereinafter, "fine direction") when the piston 45 moves in the direction closer to the bottom surface 42b.

The bi-directional pump 46 is a pump connected to the pipes 52 and 54 and supplies the hydraulic oil to the pipes 52 and 54, respectively. In the present embodiment, the bi-directional pump 46 can have any one of the configurations, that is, the bi-directional pump 46 supplies the hydraulic oil only to the pipe 52, the bi-directional pump 46 supplies the hydraulic oil only to the pipe 54, and the bi-directional pump 46 supplies different amounts of hydraulic oil to the pipes 52 and 54, respectively. The check valve 48 is a non-return valve connected to both of the pipes 52 and 54. When the pressure of the hydraulic oil of at least one of the pipes 52 and 54 is equal to or higher than a certain pressure, the hydraulic oil is discharged from at least one of the pipes 52 and 54. Moreover, no hydraulic oil is discharged to the pipes 52 and 54 because the check valve 48 is the non-return valve. Therefore, the hydraulic oil does not flow from the pipe 52 to the pipe 54 and vice versa via the check valve 48 although the check valve 48 connects the pipes 52 and 54 to each other. The tank 50 is a tank that stores the hydraulic oil discharged from at least one of the pipes 52 and 54 to the check valve 48.

The hydraulic adjustment mechanism 56 is a hydraulic oil supply mechanism connected to the pipe 54, and includes an accumulator 60, an on/off valve 62, and an on/off-valve driving power supply 66. The accumulator 60 is a hydraulic accumulator that holds the hydraulic oil of a certain amount in a high pressure state and connected to the pipe 54 via the on/off valve 62. The on/off valve 62 is arranged between the accumulator 60 and the pipe 54 and switches over between opening and closing of a channel between the accumulator 60 and the pipe 54. The on/off-valve driving power supply 66 is a backup power supply such as a battery cell, a capacitor or a battery having stored therein electric power of a certain amount, and supplies the electric power to the on/off valve 62 at the time of power failure (that is, when supply of electric power from a power plant or the like via an electric cable stops). At the time of normal operations, the on/off valve 62 is driven by electric power supplied from a control unit, for example, electric power generated by the power plant or the like and supplied via an electric cable.

The spring 68 is an urging member that is arranged between the piston 45 and the top surface 42a of the cylinder 42 in the cylinder 42. The spring 68 is a tension spring and pulls the piston 45 to the top surface 42a side of the cylinder 42. That is, the spring 68 causes a force to act on the piston 45 in a direction where the rotor blade 18 moves in the feathering direction.

The cylinder driving device 40 is configured as stated above, and supplies the hydraulic oil from the bi-directional hydraulic pump 46 to the cylinder 42 via at least one of the pipes 52 and 54 at the time of normal operations. The cylinder driving device 40 supplies the hydraulic oil from the pipe 52 to the cylinder 42 by the bi-directional hydraulic pump 46 so as to move the piston 45 to the top surface 42a side of the cylinder 42, thereby moving the rotor blade 18 in the feathering direction. Moreover, the cylinder driving device 40 supplies the hydraulic oil from the pipe 54 to the cylinder 42 by the bi-directional hydraulic pump 46 to move the piston 45 to the bottom surface 42b side of the cylinder 42, thereby moving the rotor blade 18 in the fine direction. In the present embodiment, the cylinder driving device 40 calculates a force acting on the piston 45 by adding up an urging force of the spring 68 and the hydraulic pressure of the hydraulic oil, and controls a position of the piston 45 and the pitch angle of the rotor blade 18. The cylinder driving device 40 controls the on/off valve 62 to be opened or closed according to the power generated by the electric power plant or the like and supplied via the electric cable to store the hydraulic oil of a certain amount in the accumulator 60 at the time of normal operations. Specifically, to move the rotor blade 18 in the fine direction, the hydraulic oil is supplied from the bi-directional hydraulic pump 46 to the pipe 54, the on/off valve 62 is turned on while the hydraulic pressure of the pipe 54 is high, and the accumulator 60 and the pipe 54 are turned into a state of being connected to each other. By doing so, it is possible to supply high-pressure hydraulic oil from the pipe 54 to the accumulator 60 and store the high-pressure hydraulic oil of a certain amount in the accumulator 60.

An example in which the electric power is not supplied due to power failure and in which the bi-directional hydraulic pump 46 cannot be driven is described next. First, when the rotor blade 18 is to be moved in the feathering direction, the cylinder driving device 40 keeps the on/off valve 62 to be turned off. By turning off the on/off valve 62, a state where no hydraulic oil is supplied from the bi-directional hydraulic pump 46 and the accumulator 60 is created and the tension force of the spring 68 for pulling the piston 45 to the top surface 42a side of the cylinder 42 acts on the piston 45. As a result, the piston 45 is moved to the top surface 42a side of the cylinder 42 and the rotor blade 18 rotates in the feathering direction. On the other hand, when the rotor blade 18 is to be rotated in the fine direction, the cylinder driving device 40 turns on the on/off valve 62, connects the accumulator 60 to the pipe 54, and supplies the hydraulic oil from the accumulator 60 to the pipe 54. When the hydraulic oil is supplied from the pipe 54 to the top surface 42a side of the cylinder 42, then the hydraulic oil between the top surface 42a of the cylinder 42 and the piston 45 increases in amount, and the hydraulic pressure rises. When the hydraulic pressure of the hydraulic oil between the top surface 42a of the cylinder 42 and a plate connected to the piston 45 rises, then the hydraulic oil causes a force for pushing the piston 45 toward the bottom surface 42b side of the cylinder 42 acts on the piston 45, the piston 45 moves to the bottom surface 42b side of the cylinder 42, and the rotor blade 18 rotates in the fine direction. In this manner, a state where no hydraulic oil is supplied from the accumulator 60 is created to allow the tension force of the spring 68 to dominantly act on the piston 45, whereby the rotor blade 18 can be moved in the feathering direction. Further, the hydraulic oil is supplied from the accumulator 60 and the pressure of the hydraulic oil supplied from the accumulator 60 is allowed to dominantly act on the piston 45, whereby the rotor blade 18 can be moved in the fine direction. Moreover, by adjusting this switch timing, the rotor blade 18 can be kept at a current position. A wind-power generation system 10 calculates an optimum pitch angle of the rotor blade 18 or, to be specific, a pitch angle at which the rotor blade can rotate with efficiency at an optimum rotation velocity based on the rotation speed of the rotor, actual pitch angle information, and output electric power, and controls manipulation of the cylinder driving device 40 so that the pitch angle of the rotor blade 18 is equal to the calculated pitch angle. However, even at the time of power failure, the electric power is supplied from the backup power supply such as the capacitor or battery so as to drive a control device for calculating the pitch angle and the like, whereby the wind-power generation system 10 is turned into a state of being capable of making calculations and controlling the cylinder driving device 40.

As described above, the cylinder driving device 40 of the wind-power generation system 10 can appropriately control the position of each of the rotor blades 18 only by controlling the on/off valve 62 to be turned on or off even at the time of power failure. Specifically, only by controlling the on/off valve 62 to be turned on or off even at the time of power failure by using the urging force of the spring 68 and the hydraulic pressure of the hydraulic oil supplied from the accumulator 60, the cylinder driving device 40 can move the rotor blade 18 in both directions. As a result, with the simple configuration of the spring 68, the accumulator 60, the on/off valve 62, and the on/off-valve driving power supply 66, it is possible to appropriately set the pitch angle of the rotor blade 18 for a certain time or, to be specific, for a time period either before the hydraulic oil held in the accumulator 60 is completely consumed or before the electric power of the backup power supply is completely consumed even at the time of power failure, and to efficiently generate electric power. Moreover, because of no need to drive the bi-directional hydraulic pump 46, the electric power for driving the wind-power generation system 10 at the time of power failure can be reduced and it suffices to use a small-capacity storage battery as the backup power supply for driving the on/off-valve driving power supply 66 and the control unit 30. Furthermore, it is possible to realize constant long-time control because the electric power consumed at the time of power failure can be reduced.

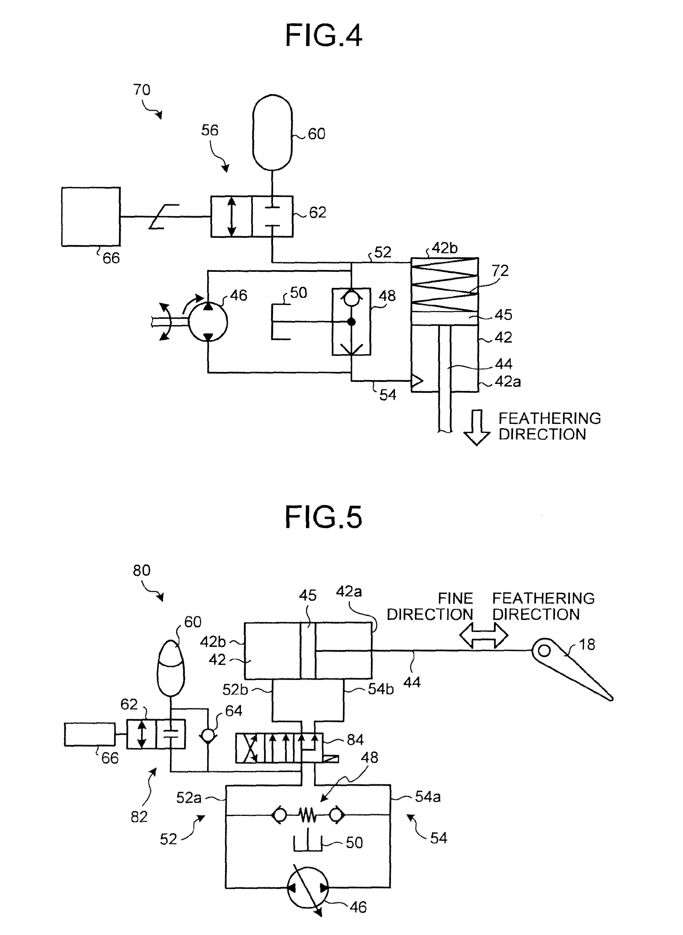

In the present embodiment, the cylinder driving device 40 is configured to connect the hydraulic adjustment mechanism 56 to the pipe 54 and to arrange the spring 68 between the piston 45 and the top surface 42a of the cylinder 42. However, the present invention is not limited thereto. FIG. 4 is a block diagram of a schematic configuration of a cylinder driving device according to another embodiment. A cylinder driving device 70 shown in FIG. 4 is basically identical in configuration to the cylinder driving device 40 shown in FIG. 3 except for arrangement positions of the pipe 52 connected to the hydraulic adjustment mechanism 56 and a spring 72. Therefore, constituent elements of the cylinder driving device 70 identical to those of the cylinder driving device 40 are denoted by like reference signs and detailed descriptions thereof will be omitted, and characteristic points of the cylinder driving device 70 are mainly described below.

The cylinder driving device 70 shown in FIG. 4 includes the cylinder 42, the connecting member 44, the piston 45, the bi-directional hydraulic pump 46, the check valve 48, the tank 50, the pipes 52 and 54, the hydraulic adjustment mechanism 56, and the spring 72. In the cylinder driving device 70, the hydraulic adjustment mechanism 56 is connected to the pipe 52. Because respective parts of the hydraulic adjustment mechanism 56 are identical in configuration to those of the cylinder driving device 40 shown in FIG. 3, explanations thereof will be omitted. Furthermore, the spring 72 is arranged between the piston 45 and the bottom surface 42b of the cylinder 42. The spring 72 is a tension spring and pulls the piston 45 to a bottom surface 42b side of the cylinder 42. That is, the spring 72 causes a force to act on the piston 45 in a direction where the rotor blade 18 moves in a fine direction.

The cylinder driving device 70 is configured as described above, and supplies hydraulic oil to the cylinder 42 via at least one of the pipes 52 and 54 by the bi-directional hydraulic pump 46 to move the piston 45, thereby moving the rotor blade 18 in either a feathering direction or the fine direction at the time of normal operations similarly to the cylinder driving device 40.

Next, at the time of power failure, when the rotor blade 18 is to be moved in the feathering direction, the on/off valve 62 is then turned on, the accumulator 60 is connected to the pipe 52, and the hydraulic oil is supplied from the accumulator 60 to the pipe 52. In this way, the cylinder driving device 70 moves the rotor blade 18 in the feathering direction by increasing an amount of the hydraulic oil between the bottom surface 42b of the cylinder 42 and the piston 45 and moves the piston 45 in a direction of the top surface 42a of the cylinder 42. On the other hand, when the rotor blade 18 is to be moved in the fine direction, the cylinder driving device 70 keeps the on/off valve 62 to be turned off. By turning off the on/off valve 62, a state where no operation valve is supplied to the cylinder 42 is created. A tension force of the spring 72 for pulling the piston 45 to the bottom surface 42b side of the cylinder 42 acts on the piston 45, whereby the piston 45 is moved to the bottom surface 42b side of the cylinder 42. By thus moving the piston 45 to the bottom surface 42b side of the cylinder 42, the rotor blade 18 is moved in the fine direction.

As described above, even when the cylinder driving device 70 is configured so that the spring 72 is arranged between a plate connected to the piston 45 and the bottom surface 42b of the cylinder 42, and so that the hydraulic adjustment mechanism 56 is connected to the pipe 52, the cylinder driving device 70 can control a position of the rotor blade 18 only by controlling the on/off valve 62 at the time of power failure. While each of the cylinder driving devices 40 and 70 uses the tension spring as the spring, a compression spring can be used as the spring. When the compression spring is used as the spring, it suffices to invert an arrangement position of the spring with respect to that of the tension spring in the cylinder driving device 40 or 70. Moreover, while the cylinder driving device 40 or 70 uses the spring, it suffices to use an urging member pushing or pulling the piston in one direction and a member other than the spring, for example, a rubber member can be used.

In the above embodiments, the cylinder driving device 40 or 70 controls the position of the rotor blade 18 by the spring 68 or 72 and the hydraulic oil supplied from the accumulator 60 of the hydraulic adjustment mechanism 56. However, the present invention is not limited thereto. FIG. 5 is a block diagram of a schematic configuration of a cylinder driving device according to another embodiment. A cylinder driving device 80 shown in FIG. 5 is basically identical in configuration to the cylinder driving device 40 shown in FIG. 3 except that the spring 68 is not arranged and a safety valve 64 and a switch valve 84 are provided. Therefore, constituent elements of the cylinder driving device 80 identical to those of the cylinder driving device 40 are denoted by like reference signs and detailed descriptions thereof will be omitted, and characteristic points of the cylinder driving device 80 are mainly described below.

The cylinder driving device 80 shown in FIG. 5 includes the cylinder 42, the connecting member 44, the piston 45, the bi-directional hydraulic pump 46, the check valve 48, the tank 50, the pipes 52 and 54, a hydraulic adjustment mechanism 82, and the switch valve 84. In the explanations below, the pipes 52 and 54 are defined as follows. Piping parts connecting the switch valve 84 to the bi-directional hydraulic pump 46 are denoted by pipes 52a and 54a, and piping parts connecting the switch valve 84 to the cylinder 42 are denoted by pipes 52b and 54b. Note that a spring is not arranged within the cylinder 42 of the cylinder driving device 80. The hydraulic adjustment mechanism 82 is a hydraulic oil supply mechanism connected to the pipe 52a, and includes the accumulator 60, the on/off valve 62, the safety valve 64, and the on/off-valve driving power supply 66. The safety valve 64 is a non-return valve arranged in parallel with the on/off valve 62 and causing the hydraulic oil to flow only in a direction from the pipe 52 to the accumulator 60. By providing the safety valve 64 in the hydraulic adjustment mechanism 82, the hydraulic oil is supplied from the safety valve 64 to the accumulator 60 when a hydraulic pressure of the hydraulic oil stored in the accumulator 60 is lower than that of the pipe 52a. It is thereby possible to store the hydraulic oil of a certain amount at a certain pressure in the accumulator 60 without opening or closing the on/off valve 62.

The switch valve 84 is provided to spread on a path of the pipes 52a, 52b, 54a, and 54b. The hydraulic adjustment mechanism 82 is connected to the pipe 52a. The switch valve 84 is a valve that has three paths and that can switch one path to one of the other paths. A first path is a path directly connecting the pipe 52a to the pipe 52b and the pipe 54a to the pipe 54b. A second path is a path connecting the pipe 52a to the pipes 52b and 54b. A third path is a pipe that connects the pipe 52a to the pipe 54b and the pipe 52b to the pipe 54a.

The cylinder driving device 80 is configured as described above, and supplies the hydraulic oil to the cylinder 42 via each pair of or one pair of the pipes 52a and 52b and the pipes 54a and 54b by the bi-directional hydraulic pump 46 to move the piston 45, thereby moving the rotor blade 18 in either a feathering direction or a fine direction at the time of normal operations similarly to the cylinder driving device 40. At this time, the switch valve 84 selects the first path.

Next, at the time of power failure, the on/off valve 62 is first turned on. When the rotor blade 18 is to be moved in the feathering direction, the cylinder driving device 80 is set into a state where the switch valve 84 and the hydraulic adjustment mechanism 82 select the second path. That is, the cylinder driving device 80 is set in the state where the pipe 52a on a side to which the hydraulic adjustment mechanism 82 is connected is connected to the pipes 52b and 54b on a side connected to the cylinder 42. The hydraulic oil supplied from the accumulator 60 is thereby supplied from the pipe 52b to between the bottom surface 42b of the cylinder 42 and the piston 45, and supplied from the pipe 54b to between the top surface 42a of the cylinder 42 and the piston 45. By supplying the hydraulic oil to both spaces, that is, the space on the bottom surface 42b side of the cylinder 42 and the space on the top surface 42a side of the cylinder 42, a higher force is allowed to act on the bottom surface 42b side on which a piston rod of the piston 45 is not arranged than that acting on the top surface 42a side thereof, the piston 45 is moved in a direction of the top surface 42a of the cylinder 42, and the rotor blade 18 is moved in the feathering direction.

On the other hand, when the rotor blade 18 is to be moved in the fine direction, the cylinder driving device 80 is set into a state where the switch valve 84 selects the third path of connecting the pipe 52a on the side to which the hydraulic adjustment mechanism 82 is connected to the pipe 54b on the side connected to the cylinder 42. That is, the cylinder driving device 80 is set in the state where the pipe 52a on the side to which the hydraulic adjustment mechanism 82 is connected is connected to the pipe 54b on the side connected to the cylinder 42. The hydraulic oil supplied from the accumulator 60 is thereby supplied from the pipe 52a via the switch valve 84, and from the pipe 54b to between the top surface 42a of the cylinder 42 and the piston 45. By supplying the hydraulic oil to between the top surface 42a of the cylinder 42 and the piston 45, the piston 45 is moved in a direction of the bottom surface 42b of the cylinder 42, and the rotor blade 18 is moved in the fine direction.

As described above, by providing the switch valve 84 and switching over the pipes connected to the hydraulic adjustment mechanism 82, the cylinder driving device 80 can move the rotor blade 18 in both directions, that is, the feathering direction and the fine direction and appropriately control the pitch angle of the rotor blade 18 similarly to the above embodiments. Furthermore, the cylinder driving device 80 can control the pitch angle of the rotor blade 18 and reduce electric power necessary for control at the time of power failure only by switching the paths of the switch valve 84 at the time of power failure. Moreover, because the cylinder driving device 80 can control the position and pitch angle of the rotor blade 18 only by providing the switch valve 84, the device configuration can be made simpler.

Meanwhile, differently from the above embodiments, when the cylinder driving device cannot control the rotor blade in the both directions but suffices to move the rotor blade only in one direction at the time of power failure, the cylinder driving device can be made simpler in configuration. FIG. 6 is a block diagram of a schematic configuration of a cylinder driving device according to another embodiment. A cylinder driving device 90 shown in FIG. 6 includes the cylinder 42, the connecting member 44, the piston 45, the bi-directional hydraulic pump 46, the check valve 48, the tank 50, the pipes 52 and 54, and a spring 92. In the present embodiment, the cylinder 42, the connecting member 44, the piston 45, the bi-directional hydraulic pump 46, the check valve 48, the tank 50, and the pipes 52 and 54 are identical in configuration to those of the cylinder driving device 40 shown in FIG. 3. The spring 92 is arranged between the piston 45 and a bottom surface 42b of the cylinder 42. Furthermore, the spring 92 is a compression spring, which pushes out the piston 45 to the top surface 42a side of the cylinder 42. That is, the spring 92 causes a force to act on the piston 45 in a direction of moving the rotor blade 18 in a feathering direction. The spring 92 always pushes out the piston 45 to the top surface 42a side of the cylinder 42.

The cylinder driving device 90 is configured as described above, and supplies hydraulic oil to the cylinder 42 via at least one of the pipes 52 and 54 by the bi-directional hydraulic pump 46 to move the piston 45, thereby moving the rotor blade 18 in either the feathering direction or a fine direction at the time of normal operations similarly to the cylinder driving device 40. The spring 92 is arranged between the piston 45 and the bottom surface 42b of the cylinder 42.

Next, at the time of power failure, a state where supply of the hydraulic oil from the bi-directional hydraulic pump 46 stops, and in which no hydraulic oil is supplied to the cylinder 42 is created. A state of the piston 45 to which the hydraulic oil is not supplied anew changes from a state where a position of the piston 45 is adjusted by adjusting a hydraulic pressure also in view of a force of the spring 92 to a state where an extrusion force of the spring 92 for pushing out the piston 45 to the top surface 42a side of the cylinder 42 dominantly acts on the piston 45, whereby the piston 45 is gradually moved to the top surface 42a side of the cylinder 42. At this time, the hydraulic oil on the top surface 42a side of the cylinder 42 is discharged from the check valve 48 to follow movement of the piston 45. By thus moving the piston 45 to the top surface 42a side of the cylinder 42, the rotor blade 18 is moved in the feathering direction.

In this way, the cylinder driving device 90 is configured to reduce a load applied to the rotor blade 18 to prevent a failure of the rotor blade 18 at the time of power failure. It is thereby possible to move the rotor blade 18 in the feathering direction at the time of power failure without particularly using a mechanism that needs a power supply but only by providing the spring 82. With this configuration, it is possible to suppress an unnecessary load from being applied to the rotor blade 18 to cause a failure of the rotor blade 18 at the time of power failure by using a simple device configuration.

### Industrial applicability

The cylinder driving device according to the present invention is useful for controlling a pitch angle of each rotor blade of a wind-power generation system and particularly suited for usage in a wind-power generation system that needs to appropriately control a pitch angle even at a time of power failure.

### Reference Signs List

- 10: wind-power generation system
- 11: foundation
- 12: column
- 14: nacelle
- 16: rotor head
- 18, 230: rotor blade
- 20: speed-up gear
- 22: generator
- 24: anemometer
- 26: anemoscope
- 28: lightning rod
- 30: control unit
- 40, 70, 80, 90, 200: cylinder driving device
- 42, 202: cylinder
- 44: connecting member
- 45, 203: piston
- 46, 204: bi-directional hydraulic pump
- 48, 206: check valve
- 50,: 208 tank
- 52, 54, 210, 212: pipe
- 56, 82, 220: hydraulic adjustment mechanism
- 60, 222: accumulator
- 62, 224: on/off valve
- 64, 226: safety valve
- 66: on/off-valve driving power supply
- 68, 72, 92: spring
- 84: switch valve

## Claims

1. A cylinder driving device that adjusts a pitch angle of a rotor blade, comprising:
a piston connected to the rotor blade via a connecting member;
a cylinder that has the piston arranged therein, reciprocates an end of the piston by a pressure difference between hydraulic pressures of hydraulic oil supplied from outside, and reciprocates the piston;
an urging member that is arranged inside the cylinder, and urges the piston in one direction;
an accumulator that is connected to the cylinder, and supplies hydraulic oil urging the piston in an opposite direction to a direction where the piston is urged by the urging member to the cylinder; and
an on/off valve that controls opening or closing of a channel between the accumulator and the cylinder.

2. The cylinder driving device according to claim 1, wherein the on/off valve opens a channel between the accumulator and the cylinder at a time of occurrence of power failure.

3. A cylinder driving device that adjusts a pitch angle of a rotor blade, comprising:
a piston connected to the rotor blade;
a cylinder that has the piston arranged therein, reciprocates an end of the piston by a pressure difference between hydraulic pressures of hydraulic oil supplied from outside, and reciprocates the piston;
a hydraulic-oil supplying unit that supplies hydraulic oil to the cylinder;
a first pipe that supplies hydraulic oil supplied from the hydraulic-oil supplying unit to the cylinder so as to urge the piston in one direction;
a second pipe that supplies hydraulic oil supplied from the hydraulic-oil supplying unit to the cylinder so as to urge the piston in an opposite direction to the one direction;
an accumulator that is connected to the cylinder, and supplies hydraulic oil to a pipe connected to the cylinder;
an on/off valve that controls opening or closing of a channel between the accumulator and the cylinder; and
a switch unit arranged between the on/off valve and the cylinder, and switchable over between a path of supplying hydraulic oil supplied from the accumulator to the first pipe and a path of supplying hydraulic oil supplied from the accumulator to the second pipe.

4. The cylinder driving device according to claim 3, wherein
the hydraulic-oil supplying unit stops at a time of occurrence of power failure,
the on/off valve opens a channel between the accumulator and the cylinder at a time of occurrence of power failure, and
the switch unit is activated at a time of occurrence of power failure.

5. A cylinder driving device that adjusts a pitch angle of a rotor blade, comprising:
a piston connected to the rotor blade;
a cylinder that has the piston arranged therein, reciprocates an end of the piston by a pressure difference between hydraulic pressures of hydraulic oil supplied from outside, and reciprocates the piston;
a hydraulic-oil supplying unit that supplies hydraulic oil to the cylinder;
a first pipe that supplies hydraulic oil supplied from the hydraulic-oil supplying unit to the cylinder so as to urge the piston in one direction;
a second pipe that supplies hydraulic oil supplied from the hydraulic-oil supplying unit to the cylinder so as to urge the piston in an opposite direction to the one direction; and
an urging member that is arranged inside the cylinder, and urges the piston in a direction of moving the piston so that the rotor blade moves in a direction of feathering a wind.
